(19) Europäisches Patentamt
European Patent Office
Office européen des brevets

(11) Publication number: **0 320 651 A2**

# (12) EUROPEAN PATENT APPLICATION

(21) Application number: **88119321.3**

(22) Date of filing: **21.11.88**

(51) Int. Cl.4: **C08L 69/00 , //(C08L69/00, 67:02)**

(30) Priority: **16.12.87 US 133856**

(43) Date of publication of application: **21.06.89 Bulletin 89/25**

(84) Designated Contracting States: **DE FR GB IT NL**

(71) Applicant: **GENERAL ELECTRIC COMPANY**
**1 River Road**
**Schenectady New York 12305(US)**

(72) Inventor: **Boutni, Omar Mohamed**
**1232 Oriole Circle**
**Mt. Vernon Indiana 47620(US)**

(74) Representative: **Catherine, Alain**
**General Electric France Service de Propriété Industrielle 18 Rue Horace Vernet B.P. 76**
**F-92134 Issy-les-Moulineaux Cédex(FR)**

## (54) Thermoplastic polycarbonate-polyester blends.

(57) Thermoplastically moldable compositions comprised a blend of a polycarbonate with a polyester derived from the reaction of a glycol with an acid selected from the group consisting of phthalic, isophthalic and terephthalic acids; and a polyester elastomer. Articles molded from the compositions of the invention exhibit an enhanced impact resistance and hydrocarbon solvent resistance in comparison to articles molded from the polyesters alone.

EP 0 320 651 A2

# THERMOPLASTIC POLYCARBONATE-POLYESTER BLENDS

## BACKGROUND OF THE INVENTION

### Field of the Invention

The invention relates to synthetic polymeric resin compositions useful for thermoplastic molding and more particularly relates to a moldable blend of aromatic polycarbonates and polyesters including a polyester elastomer.

## BRIEF DESCRIPTION OF THE PRIOR ART

High molecular weight polyesters prepared by alcoholysis of esters of phthalic acid, isophthalic and terephthalic acid with a glycol and subsequent polymerization are well known in the art; see for example the descriptions given in the U.S. patents 2,465,319 and 3,047,539. These polyesters are thermoplastically moldable and have found many uses in the past. However, articles molded from these polyesters are well known to lack a high degree of impact resistance. The present invention includes the discovery that the impact resistance of molding compositions based on these prior art polyesters can be improved to some degree by blending them with compatible polyester elastomers, such as a polycyclohexane dimethylcyclohexanedicarboxylic acid in various proportions.

The present invention is also based upon a discovery that the impact resistance of articles molded from blends of the aforementioned two polyesters may be dramatically improved when the molding composition includes a polycarbonate resin, optionally with a known and conventional impact-modifier conventionally used to modify the impact resistance of the polycarbonate. This advantage is obtained without sacrificing other desirable properties of the polyester. An enhancement of resistance to hydrocarbon solvents has also been noted.

Aromatic polycarbonate resins are a well known class of synthetic polymeric resins, generally prepared by the reaction of a polyhydric phenol with a carbonate precursor; see for example U.s. Patent 3,989,672. These resins, for the most part, are thermoplastic and readily molded under heat to fabricate a wide variety of articles such as automotive parts, tool housings and like structural components. The polycarbonate resins employed as ingredients of the compositions of the present invention lend desirable properties which make the compositions of the invention containing a polycarbonate, useful to thermoplastically mold similar automotive parts and tool housings with impact and hydrocarbon solvent resistance.

## SUMMARY OF THE INVENTION

The invention comprises a thermoplastic molding composition, which comprises;

a thermoplastic, aromatic polycarbonate;

a polyester elastomer characterized in part by a durometer hardness of Shore D 50-60; an elongation at fracture of 300-400 percent; a tensile stress at 300 percent elongation of 20-25 MPa; a flexural modulus of 120-130 MPa; an Izod impact strength of notch at -30° C. of less than 900 J/m and a torsional modulus temperature of -30 to -45° C. at 240 MPa; and

a thermoplastic polyester of a glycol and an acid selected from the group consisting of phthalic, isophthalic and terephthalic acids and mixtures thereof.

The invention also comprises articles thermoplastically molded from the compositions of the invention, such as structural components of automobile vehicles and the like. The articles of the invention which include a proportion of polycarbonate resin exhibit improved impact strength and a higher resistance to hydrocarbon solvents when compared to articles molded without the polycarbonate presence.

DETAILED DESCRIPTION OF THE PREFERRED EMBODIMENTS OF THE INVENTION

The high molecular weight thermoplastic polyesters used in the practice of the invention are preferably polymeric glycol esters of terephthalic acid and isophthalic acid. They are available commercially, from General Electric Company, Pittsfield, Massachusetts under the Trademark VALOX® or can be prepared by known techniques, such as by the alcoholysis of esters of the acid with a glycol and subsequent polymerization; by heating glycols with free acids or with halide derivatives thereof, and similar processes. These methods are described in U.S. Pat. Nos. 2,465,319 and 3,047,539, and elsewhere.

Although the glycol portion of the polyester can contain from 2 to 10 carbon atoms, it is preferred that it contain 2 to 4 carbon atoms in the form of linear alkylene chains. Representative glycols are ethylene glycol, propylene glycol, butylene glycol, octylene glycol and decylene glycol.

Preferred polyesters will be of the family consisting of high molecular weight, polymeric glycol terephthalates or isophthalates having repeating units of the general formula:

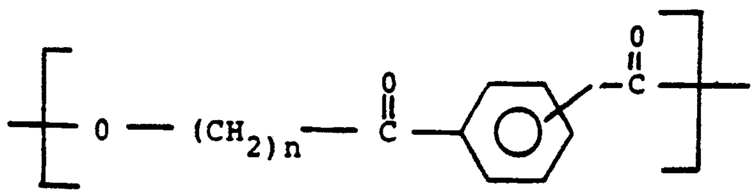

wherein n is a whole number of from 2 to 4, and mixtures of such esters, including co-polyesters of terephthalic and isophthalic acids of up to 30 mole percent isophthalic units.

Especially preferred polyesters of the family described above are poly(ethlyene terephthalate) and poly(1,4-butylene terephthalate). Special mention is made of the latter because it crystallizes at such a rate that it may be used for injection molding without the need for nucleating agents or long cycles, as is sometimes necessary with, for example, poly(ethylene terephthalate)

Illustratively, high molecular weight thermoplastic.polyesters of the type described above will have an intrinsic viscosity of at least about 0.4 decilliters/gram and, preferably, at least 0.7 decilliters/gram as measured in a 60:40 phenoltetrachloroethane mixture at 30° C. At intrinsic viscosities of at least about 1.1 decilliters/gram there is further enhancement of toughness of the compositions of the invention. The thermoplastic polyesters described above include co-polyesters which may be prepared by ester interchange in accordance with known procedures. Preferably, the co-polyesters are derived from terephthalic acid and/or isophthalic acid and/or derivatives thereof and a glycol, which may be a straight or branched chain aliphatic/cycloaliphatic glycol. Illustratively, the glycol will be ethylene glycol; 1,4-butanediol; 1,5-pentanediol; 1,6-hexanediol; 1,9-nonanediol; 1,10-cyclohexanedimethanol, a mixture of any of the foregoing, or the like. Additional dicarboxylic acids suitable for the co-polyesters include naphthalene dicarboxylic acids, phenyl indane dicarboxylic acid, compounds of the formula:-

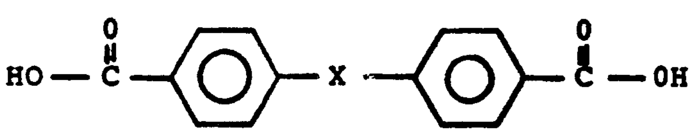

in which X may be alkylene or alkylidene of from 1 to 4 carbon atoms, carbonyl, sulfonyl, oxygen, or a bond between the benzene rings, and aliphatic dicarboxylic acids having from 6 to 12 carbon atoms in the chain including but not limited to suberic acid, sebacic acid, azelaic acid, adipic acids and the like.

Block co-polyesters useful in the compositions of this invention are prepared by the reaction of terminally-reactive poly(1,4-butylene terephthalate), preferably, low molecular weight, and a terminally-reactive polyester or co-polyester in the presence of a catalyst for transesterification, such as zinc acetate, manganese acetate, titanium esters and the like. The terminal groups can comprise hydroxyl, carboxyl, carboalkoxy, and the like, including reactive derivitives thereof. The result of a reaction between the two terminally reactive groups of course, must be an ester linkage.

After initial mixing, polymerization is carried out under standard conditions, e.g., 220° to 280° C., in a high vacuum, e.g., 0.1. to 2 mm Hg to form the block co-polymer of minimum randomization in terms of

distribution of claim segments. These block copolyesters are described for example, in abandoned U.S. Patent application Ser. No. 752,325 filed Dec. 20, 1976, incorporated herein by reference.

The co-polyester designated component of these block co-polyesters may be terminally reactive segments of the co-polyester as described herein above. Again, most preferably, these co-polyester are derived from an aliphatic glycol and an admixture of aromatic and aliphatic dibasic acids in which the mole ratio concentration of aromatic to aliphatic acids is from 1 to 9 to about 9 to 1, with an especially preferred range of from 3 to 7 to about 7 to 3.

The terminally reactive aliphatic polyester designated component of the block co-polyester will contain substantially stoichiometric amounts of the aliphatic diol and the aliphatic dicarboxylic acid, although hydroxy-containing terminal groups are preferred.

In addition to their ease of formation by well-known procedures, both the aromatic/aliphatic co-polyesters and the aliphatic polyester suitable for use in the block co-polymers are commercially available. One source for such materials is the Ruco Division/Hooker Chemical Company, Hicksville, N.Y., which designates its compounds under the tradename "Rucoflex".

The block co-polyesters when used in the invention preferably comprise 95 to 90 parts by weight of poly(1,4-butylene terephthalate) segments. The poly(1,4-butylene terephthalate) blocks, before incorporation into the block co-polyesters, as well as the co-polyester described herein above, will preferably have an intrinsic viscosity of above 0.1 dl/g and preferably, between 0.1 and 0.5 dl/g, as measured in a 60:40 mixture of phenol and tetrachloroethane at 30°C. The balance, 50 to 5 parts by weight of the block co-polyester will comprise blocks of the aforementioned aliphatic/aromatic co-polyesters and/or aliphatic polyesters.

As will be understood by those skilled in the art, the poly(1,4-butylene terephthalate) block can be straight chain or branched, e.g., by use of a branching component, e.g., 0.5 to 1 mole percent, based on terephthalate units, of a branching component which contains at least 3 ester-forming groups. This can be a polyol, e.g. pentaerythritol,, trimethylolpropane, and the like or a poly basic acid compound, e.g., trimethyl trimestate, and the like.

The invention also includes blends of poly(ethylene terephthalate), poly(1-4,butylene terephthalate), the foregoing copolyesters and/or block co-polyesters and/or derivatives thereof, or any combination of these.

A wide variety of polycarbonate resins are known as are methods of their preparation, which are thermoplastically moldable. These polycarbonate resins may be prepared by the reaction of a polyhydric phenol with a carbonate precursor such as phosgene, a halo-formate or a carbonate ester. The method of preparation is described for example in U.S. Patents 4,001,184 and 4,474,999, both of which are herein incorporated by reference.

In general, the polycarbonate resins are typified as possessing recurring structural units of the formula:

$$\left( O-A-O-\overset{\overset{\displaystyle O}{\|}}{C} \right)$$

wherein A is a divalent aromatic moiety of the polyhydric phenol employed in the polymerization reaction. The dihydric phenols which may be employed to provide such aromatic carbonate polymers are mononuclear or polynuclear aromatic compounds, containing as functional groups two hydroxy radicals, each of which is attached directly to a carbon atom of an aromatic nucleus. Typical dihydric phenols are: 2,2-bis-(4-hydroxyphenyl)propane; hydroquinone; resorcinol; 2,2-bis-(4-hydroxyphenyl)pentane; 2,4′-(dihydroxyphenyl)methane; bis-(2-hydroxyphenyl) methane; bis-(4-hydroxyphenyl)methane; bis-(4-hydroxy-5-nitrophenyl)methane; 1,1-bis(4-hydroxyphenyl) ethane; 3,3-bis(4-hydroxyphenyl)pentane; 2,2-dihydroxydiphenyl; 2,6-dihydroxynaphthalene; bis-(4-hydroxydiphenyl) sulfone; bis-(3,5-diethyl-4-hydroxyphenyl)-sulfone; 2,2-bis-(3,5-dimethyl-4-hydroxyphenyl))propane; 2,4′-dihydroxydiphenyl sulfone; 5′-chloro-2,4′-dihydroxydiphenyl sulfone; bis-(4-hydroxyphenyl)diphenyl sulfone; 4,4′-dihydroxydiphenyl ether; 4,4′-dihydroxy-3,3′dichlorodiphenyl ether; 4,4′-dihydroxy-2,5-dimethylphenyl ether; and the like.

A variety of additional dihydric phenols which may be employed to provide such carbonate polymers are disclosed in U.S. Patent No. 2,999,835. It is, of course, possible to employ two or more different dihydric phenols or a dihydric phenol in combination with a glycol, a hydroxy terminated polyester, or a dibasic acid in the event that a carbonate copolymer rather than a homopolymer is desired for use in the preparation of the compositions of the invention.

The carbonate precursor may be either a carbonyl halide, a diaryl carbonate or a bishaloformate. The carbonyl halides include carbonyl bromide, carbonyl chloride, and mixtures thereof. The bishaloformates suitable for use include the bishaloformates of dihydric phenols such as bischloroformates of 2,2-bis(4-hydroxyphenol)propane, 2,2-bis(4-hydroxy-3,5-dichlorophenol)propane, hydroquinone, and the like, or bishaloformates of glycols such as bishaloformates of ethylene glycol, and the like. While all of the above

carbonate precursors are useful, carbonyl chloride, also known as phosgene, is preferred.

Also included within the scope of the present invention are the use of high molecular weight thermoplastic randomly branched polycarbonates. These randomly branched polycarbonates are prepared by coreacting a polyfunctional organic compound with the aforedescribed dihydric phenol and carbonate precursor. Representative of the polyfunctional organic compounds useful in making the branched polycarbonates are set forth in U.S. Patent Nos. 3,028,365; 3,334,154; 4,001,184; 4,131,575; all of which are hereby incorporated herein by reference thereto.

The polycarbonate resin components of the compositions of the invention are also represented by so-called "end-capped" polycarbonates. More specifically, it is known that in certain procedures of producing aromatic carbonate polymers from dihydric phenols and a carbonate precursor such as phosgene small amounts of certain molecular weight regulators or chain terminaters can be used to provide end or terminal groups of the carbonate polymer and thereby control the molecular weight of the polycarbonate.

A molecular weight regulator, i.e.; a chain stopper, is generally added to the reactants prior to or during the contacting of them with a carbonate precursor. Useful molecular weight regulators include, but are not limited to, monohydric phenols such as phenol, chroman-I, paratertiarybutylphenyl, p-cumylphenol and the like. Techniques for the control of molecular weight are well known in the art and may be used for controlling the molecular weight of the thermoplastic polycarbonate resins employed as components of the resins of the invention.

The preferred aromatic carbonate polymer is a homopolymer derived from 2,2-bis(4-hydroxyphenyl)-propane (bisphenol-A).

Preferably, the polycarbonate resin will have an intrinsic viscosity (as measured in methylene chloride at a temperature of 25 °C) ranging from about 0.30 to about 1.00 deciliters/gram.

The polyester elastomer component of the compositions of the invention are preferably characterized by the following physical properties:

| Property | ASTM Method | Value |
|---|---|---|
| Specific Gravity | D 792 | 1.1 - 1.2 |
| Durometer Hardness, Shore D/A Scales | D 2240 | 50/90-60/100 |
| Tensile Fracture Strength at 50 cm/min. Crosshead Speed, (MPa) | D 412* | 20 - 30 |
| Elongation at Fracture, (%) | | 300 - 400 |
| Tensile Stress, MPa | | |
| @ 100% Elongation | | 14 - 16 |
| @ 200% Elongation | | 17 - 19 |
| @ 300% Elongation | | 20 - 23 |
| Tension Set After 100% Elongation, (%) | | 50 - 60 |
| Tension Set After Break, (%) | | 180 - 220 |
| Tensile Modulus, MPa at 5 mm/min Crosshead Speed | | 100 - 120 |
| Flexural Modulus, (MPa) | D 790 | 120 - 130 |
| Split Tear Strength, (N/mm) | D 1938 | 80 - 90 |
| Compression Set, Unannealed, (%) | | |
| (Method B) | D 395 | |
| @ 23 °C. | | 35 - 45 |
| @ 70 °C. | | 65 - 75 |
| Izod Impact, J/m of notch | D 256 | |
| @ -30 °C. | | 900 |
| Torsional Modulus Temperature, (°C.) | D 1043 | |
| @ 240 MPa | | -30 - -40 |
| @ 310 MPa | | -35 - -45 |
| @ 930 MPa | | -50 - -60 |
| Water Absorption, 24 h, (%) | D 570 | 0.2 - 0.6 |

* D 412, Die C specimens, which are equivalent to ASTM D 638, Type IV specimens 1.9 mm thick.

In addition, the polyester elastomers preferably have thermal properties as follows:

| Property | ASTM Method | Value |
|---|---|---|
| Flow Rate at 230° C./2160 g., (g/10) | D 1238 | 4 - 20 |
| Crystalline Peak, Melting Point, Tm, (° C) | | 195 - 215 |
| Crystallization Temperature on Cooling Tcc, ° C | | 140 - 160 |
| Glass Transition, Tg, (° C) | | 10 |
| Specific Heat, (J/g/° K/° CB) | D 2766 | |
| 25° C - solid | | 1.5 - 1.9 |
| 200° C. - transition | | 3.0 - 3.3 |
| 225° C. - melt | | 3.1 - 3.4 |
| Heat of Fusion, (J/g) | E 793 | 12 - 15 |
| Vicat Softening Temperature, (° C) | D 1525 | 160 - 170 |
| Viscosity at 25° C. [measured in a solution of 60% phenol and 40% trichloroethane (w/w)] | | 1.05-1.23 |

Most preferably, the polyester elastomer will have optical properties when extruded into a film, as follows:

| Property | ASTM Method | Value |
|---|---|---|
| Haze (%) | D 1003 | 0.8 - 1.2 |
| Gloss at 45° (Gardner Rating) | D 2457 | 80 - 90 |
| Light Transmission, (%) | D 1003 | 85 - 95 |

A preferred polyester elastomer having the desired properties is polycyclohexane dimethylcyclohexanedicarboxylate elastomer.

Generally, the polyester component resins comprise from 30 to 95 parts by weight of the compositions of the invention and the articles of the invention, preferably 40 to 60 parts, most preferably about 50 parts. The ratio of polyester of a glycol and a phthalic, isophthalic and/or terephtalic acid to polyester elastomer is advantageously within the range of from 3:1 to 6:1.

The proportion of polycarbonate resin employed in the compositions of the invention may be within the range of from 5 to 70 parts by weight of the compositions and the articles of the invention The method of the invention may be carried out by a homogeneous blending of the resin components. The blending may be carried out by adding the three resins together and mixing with conventional technique and apparatus. In general, the mixtures may be blended by pre-mixing in conventional mixing rolls, dough mixers, Banbury mixers and the like and blending the pre-mix in an extruder or fluxing it on a mill at an elevated temperature sufficient to achieve a homogeneous melt blending. Upon cooling, the blend may be pelletized and stored for use.

The thermoplastic molding resin compositions of the invention may also optionally contain various commonly known and used additives such as, for example, antioxidants; antistatic agents; inert fillers such as glass, talc, mica, and clay; ultraviolet radiation absorbers such as the benzophenones, benzotriazoles, and the like; hydrolytic stabilizers such as the epoxides disclosed in U.S. Patent Nos. 3,489,716, 4,138,379 and 3,839,247, all of which are incorporated herein by reference; color stabilizers such as the organophosphites; thermal stabilizers such as a phosphite; and mold release agents.

The compositions of the invention may advantageously include a flame retarding proportion of a flame retarding agent. Some particularly useful flame retardants are the alkali and alkaline earth metal salts of sulfonic acids. These types of flame retardants are disclosed in U.S. Patent Nos. 3,775,367; 3,933,734; 3,931,100; 3,978,024; 3,948,851; 3,926,980; 3,919,167; 3,909,490; 3,953,396; 3,953,300; 3,917,559; 3,951,910 and 3,940,366, all of which are hereby incorporated by reference. A flame retarding proportion may vary widely but is generally within the range of from 0.1 to 2 percent by weight of the total composition.

The resin compositions of the invention may be thermoplastically molded using conventional techniques and apparatus; for example by compression, injection, calendaring, extrusion and like techniques.

In preferred compositions of the invention containing a proportion of polycarbonate resin (preferred for molding both relatively thick and thin articles), a conventional and known impact modifier for a polycarbonate resin is added to the compositions of the invention in an impact-modifying proportion.

Representative of such known impact modifiers are selectively hydrogenated linear, sequential or radial teleblock copolymers of a vinyl aromatic compound (A) and $(A')_n$ and an olefinic elastomer (B) of the A-B-A'; A $(B-A-B)_nA$; A $(B-A)_nB$; or B $[(A-B_n)B]_4$ type wherein n is an integer of from 1 to 10, inclusive. These copolymers may be prepared by known methods; see the description given in the U.S. Patent 4,481,331. Commercially available copolymers include for example Kraton G® -1650 and Kraton G® -1651 available from Shell Chemical Company. The Kraton G® has a significant quantity of the residual aliphatic unsaturation removed by selective hydrogenation.

Also commercially available are the Solprenes manufactured by Phillips Petroleum Company.

The radial teleblock copolymers of which the Solprenes are typical examples can be characterized as having at least three polymer branches with each branch of the radial block polymer comprising terminal non-elastomeric segments, e.g. (A) and (A') as defined hereinabove. The branches of the radial block polymer contain a terminal non-elastomeric segment attached to an elastomeric polymer segment, e.g., (B) as defined above. These are described in U.S. Patent No. 3,753,936 and in U.S. Patent No. 3,281,383, both of which are incorporated herein by reference, and they are selectively hydrogenated by procedures known per se. In any event, the term "selective hydrogenation" is used herein to contemplate polymers in which the elastomeric blocks (A) and (A') have been left unhydrogenated, i.e., aromatic.

Further examples of impact modifiers advantageously added to the compositions of the invention are the polyolefins and the acrylate copolymers, particularly the core shell polymers such as Rohm and Haas Acryloid KM330; see U.S. Patent No. 4,096,202.

Also useful as impact modifiers are alkenyl aromatic resins. The alkenyl aromatic resin is a polymer having at least a portion of its units derived from an alkenyl aromatic monomer such as styrene, alpha-methylstyrene, p-methylstyrene, tert-butyl styrene, bromo-styrene, chlorostyrene, dimethylstyrene, p-methyl-alpha-methylstyrene, p-chloro-alpha-methylstyrene, vinyl xylene, vinyl naphthalene and vinyl toluene.

Specific examples of alkenyl aromatic monomers include styrene, chlorostyrene, bromostyrene, alphamethylstyrene, vinyl xylene, vinyl naphthalene and p-methyl styrene.

The alkenyl aromatic resin may be modified with a rubber. The term "rubber" as used in this disclosure is meant to encompass both natural and synthetic forms, and to include polyurethane rubber, ethylene/vinyl acetate rubber, silicone rubber, polyether rubber, polypentenamer rubber and ethylene-propylene-diene rubber; diene rubbers, i.e., homopolymers of conjugated dienes having e.g., 4 to 8 carbon atoms, such as butadiene, isoprene, piperylene and chloroprene; and copolymers of dienes with each other or with styrene, acrylic acid, methacrylic acid, or derivatives thereof (e.g., acrylonitrile, methacrylonitrile, acrylic acid, methacrylic acid, butyl acrylate and methyl methacrylate), or isobutylene. Preferably, the rubber is selected from among butadiene, butadiene/styrene, butadiene/methyl methacrylate, butadiene/ butyl acrylate, ethylene/propylene/diene, polypentanamer and butadiene/acrylonitrile rubbers.

An example of a another impact modifier for use in the present invention is an EPDM rubber modified polystyrene resin. The term "EPDM" is used in the art to designate rubbery interpolymers of a mixture of monoolefins and a polyene. Preferred types for use in the practice of this invention comprise from about 10 to about 90 mole percent of ethylene, from about 10 to about 90 mole percent of an alpha olefin having 3 to 10 carbon atoms, and from 0.1 to about 10 mole percent of a non-conjugated cyclic or open-chain diene having from 4 to 20 carbon atoms. In the most preferred embodiments, the rubbery interpolymer is derived from ethylene, propylene and a diene selected from 1,4-ethylidene-hexadiene, dicyclopentadiene, and especially, 5-ethyl-idene-2-norbornene.

The alkenyl aromatic resin that is modified with a rubbery interpolymer may be prepared by dissolving the rubbery interpolymer in the alkenyl aromatic monomer and polymerizing the mixture in the presence of a free radical initiator until 90-100% by weight of the alkenyl aromatic monomer has reacted to form said modified alkenyl aromatic resin. These materials are commercially available, such as the product Taflite $^R$ 925-01 which is a suspension polymerized EPDM modified, high impact polystyrene that contains about 12% of benzene insoluble rubber and the average rubber particle size is about 8-10 microns. The EPDM component is an ethylene-propylene-ethylidene-norbornene terpolymer.

Rubber modified polystyrenes containing smaller rubber particles may also be used, such as those described in U.S. Patent No. 4,101,504 (EPDM rubber particles having a median diameter of less than about 2 microns).

The preferred modified alkenyl aromatic resins are those made with an EPDM rubbery interpolymer of

ethylene, propylene and 5-ethylidene-2-norbornene and styrene. Preferred modified alkenyl aromatic resins will include from about 5 to about 20% by weight of rubber interpolymer.

Further examples of impact modifiers which may be added to the compositions of the invention are copolymers made from an olefin, e.g., ethylene, propylene, or the like, copolymerized with one or more of a comonomer comprising a $C_1$-$C_6$ alkyl acrylate, e.g., methyl acrylate, ethyl acrylate, hexyl acrylate and the like; a $C_1$-$C_6$ alkyl methacrylate, e.g., methyl methacrylate, ethyl methacrylate, hexyl methacrylate, and the like; acrylic acid; or methacrylic acid. Especially preferred are the well known copolymers of ethylene with an alkyl ester of acrylic acid. These are disclosed in U.S. Patent No. 2,953,551. Generally, the acrylate or methacrylate portion of the copolymer can range from about 10 to about 30 weight percent.

The olefin portion of the copolymer can range from about 70 to about 90 weight percent. The preferred copolymer is an ethylene-ethyl acrylate copolymer in which the weight ratio of the ethylene fraction to the ethyl acrylate fraction is about 4.5 to 1. Suitable olefin-acrylate copolymers, as defined above, can be prepared by methods well known to those skilled in the art or can be obtained commercially. For example, Union Carbide's Bakelite® DPD-6169 ethylene-ethyl acrylate copolymer is advantageous for use in the present invention.

Methods for the preparation of these polymers, both commercial and non-commercial, are abundantly described in the literature and known to those skilled in the art.

Still another impact-modifier which may be included as a component of the compositions of the invention are organopolysiloxane-polycarbonate block co-polymers, which are highly compatible with the major ingredients of the compositions of the invention. These block copolymers are generally well known resins as are methods of their preparation; see for example preparative descriptions given in the U.S. Patents 4,027,072, 4,123,588 and 4,569,970. Representative of the polysiloxane- polycarbonate copolymers advantageously employed in the compositions of the invention are those prepared by reacting (A) a halogen chain-stopped polydiorganosiloxane composed of from about 5 to 200 chemically combined diorganosiloxy units consisting essentially of diakylsiloxy units which are connected to each other by silicon-oxygen-silicon linkages wherein each of the silicon atoms has two organo radicals attached through a carbon-silicon bond, and (B) a dihydric phenol having the formula:-

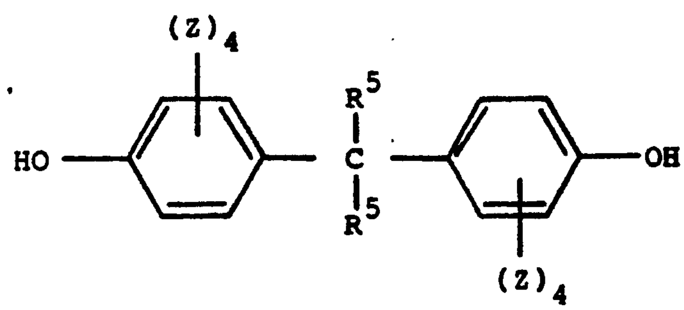

where Z is a member selected from the class consisting of hydrogen, lower alkyl radicals and halogen radicals and combinations thereof, and $R^5$ is a member selected from the class consisting of hydrogen, hydrocarbyl and halogenated hydrocarbyl radicals; and phosgenating the purified reaction product until the resulting copolymer achieves a maximum intrinsic viscosity.

The term "halogen" as used herein is embracive of chlorine, bromine, iodine and fluorine.

The term "hydrocarbyl" as used herein means the monovalent moiety obtained upon removal of a hydrogen atom from a parent hydrocarbon. Representative of hydrocarbyl are alkyl of 1 to 20 carbon atoms, inclusive, such as methyl, ethyl, propyl, butyl, pentyl, hexyl, heptyl, octyl, nonyl, undecyl, decyl, dodecyl, tridecyl, tetradecyl, pentadecyl, hexadecyl, heptadecyl, octadecyl, nonodecyl, eicosyl, and isomeric forms thereof; cycloalkyl of 3 to 8 carbon atoms, inclusive, such as cyclopropyl, cyclobutyl, cyclopentyl, cyclohexyl, cycloheptyl, cyclooctyl and the like; alkenyl of 2 to 20 carbon atoms, inclusive, such as vinyl, allyl, butenyl, pentenyl, hexenyl, octenyl, nonenyl, decenyl, undecécyl, dodecenyl, tridecenyl, pentadecenyl, octadecenyl, and isomeric forms thereof; aryl such as phenyl, naphthyl and the like; aralkyl of 7 to 20 carbon atoms such as phenmethyl, phenethyl, phenpentyl, phendecyl, phennonodecyl and isomeric forms thereof.

The term "lower alkyl" is used throughout the specification and claims to mean alkyl as previously defined, having 1 to 4 carbon atoms.

An impact-modifying proportion of the known impact modifiers described above is generally within the

range of from about 0.05 to 15 parts by weight of the resinous and elastomeric components of the composition, preferably from 3-12 parts, most preferably about 10 parts.

The following examples describe the manner and process of making and using the invention and set forth the best mode contemplated by the inventor for carrying out the invention but are not to be construed as limiting the scope of the invention. All parts are by weight unless otherwise stated. Test results are in accordance with the following test methods.

Intrinsic Viscosity and Inherent Viscosity (IV):

The intrinsic viscosity of polycarbonate resins was measured at a temperature of 25° C in methylene chloride and is reported in deciliters/ gram (dl/g) The inherent viscosity of the polyester elastomer is measured at a temperature of 25° C. in a mixture of 60% phenol and 40% trichloroethane (w/w) using the Eastman Test Method ECD-A-AC-G-V-1; Eastman Chemical Products, Inc. Kingsport, TN.

Tensile Strength and Elongation

ASTM test method D-638.

Flexural Modulus

ASTM test method D-790.

Weld Line Strength

ASTM test method D-256.

Kaisha Index (KI)

The KI of a resin is a measurement of its melt viscosity and is obtained in the following manner: 7 grams of resin, dried a minimum of 90 minutes at 125° C., are added to a modified Tinius-Olsen model T3 melt indexer; the temperature in the indeer is maintained at 300° C. and the resin is heated at this temperature for 6 or 12 minutes, after 6 or 12 minutes. the resin is forced through a 1.04775 mm radius orifice using a plunger of radius 4.7371 mm and applied force of 8.02872 kg.; the time required for the plunger to travel 5.08 cm. is measured in centiseconds; reported as the KI.

EXAMPLES 1-6

A polycarbonate (PC) prepared by the reaction of phosgene and bisphenol-A and having an intrinsic viscosity of from about 0.49 to about 0.52 deciliters/gram (dl/g) (LEXAN® resin 145; General Electric Co., Mount Vernon, IN.) was provided. In the examples 4-6, aliquots of the resin provided were blended with proportions of (poly(1,4-butylene terephthalate)(Valox® 310; intrinsic viscosity of 0.9 measured in a solution of 60% phenol and 40% tetrachloroethane (w/w) at a temperature of 30° C. General Electric Corp., Mt. Vernon, In.), a conventional PC impact-modifier and a thermoplastic polyester elastomer (Ecdel 9965 having an inherent viscosity of 1.05 or Ecdel 9966 having an inherent viscosity of 1.16 or Ecdel 9967 having an inherent viscosity of 1.23; Eastman Chemical Products, Inc., Kingsport, TN.) characterized in part by the following representative physical properties:

| Property, Units | ASTM Method | Value |
|---|---|---|
| Specific Gravity | D 792 | 1.13 |
| Durometer Hardness, Shore D/A Scales | D 2240 | 55/95 |
| Tensile Fracture Strength at 50 cm/min. Crosshead Speed, (MPa) | D 412* | 24 |
| Elongation at Fracture, (%) | | 380 |
| Tensile Stress, MPa | | |
| @ 100% Elongation | | 14.8 |
| @ 200% Elongation | | 17.9 |
| @ 300% Elongation | | 21.7 |
| Tension Set After 100% Elongation, (%) | | 55 |
| Tension Set After Break, (%) | | 200 |
| Tensile Modulus, MPa at 5 mm/min Crosshead Speed | | 110 |
| Flexural Modulus, (MPa) | D 790 | 124 |
| Split Tear Strength, (N/mm) | D 1938 | 85 |
| Compression Set, Unannealed, (%) | | |
| (Method B) | D 395 | |
| @ 23 °C. | | 40 |
| @ 70 °C. | | 70 |
| Izod Impact, (J/m of notch) | D 256 | |
| @ -30 °C. | | less than 854 |
| @ -40 °C. | | less than 854 |
| Torsional Modulus Temperature,(°C.) | D 1043 | |
| @ 240 MPa | | -37 |
| @ 310 MPa | | -40 |
| @ 930 MPa | | -57 |
| Water Absorption, 24 h, (%) | D 570 | 0.4 |

* D 412, Die C specimens, which are equivalent to ASTM D 638, Type IV specimens were 1.9 mm thick.

| Property | ASTM Method | Value |
|---|---|---|
| Crystalline Peak, Melting Point, Tm, (°C) | | 195 - 215 |
| Crystallization Temperature on Cooling Tcc, (°C) | | 150 |
| Glass Transition, Tg, (°C) | | less than 0 |
| Specific Heat, (J/g/°K/°CB) | D 2766 | |
| 25°C - solid | | 1.7 |
| 100°C - solid | | 1.9 |
| 150°C - solid | | 2.2 |
| 175°C - solid | | 2.6 |
| 200°C. - transition | | 3.1 |
| 225°C. - melt | | 3.2 |
| Heat of Fusion, (J/g) | E 793 | 13 |
| Thermal Conductivity, (W/m°K) | C 177 | |
| 0° - 50°C. | | 0.25 |
| 50°C - 200°C | | 0.21 |
| Coefficient of Thermal Expansion, mm/mm/°C | D 696 | 15 X $10^{-5}$ |
| Brittleness Temperature, (°C) | D 746 | less than -70 |
| Vicat Softening Temperature, (°C) | D 1525 | 165 |
| Film Optical Properties: | | |
| Haze (%) | D 1003 | 1.0 |
| Gloss at 45° (Gardner Rating) | D 2457 | 85 |
| Light Transmission, (%) | D 1003 | 90 |

The Examples 1-3 were prepared without the presence of the polycarbonate or the impact-modifier as a control.

The mixtures were uniformly blended together in a laboratory tumbler with or without added impact modifiers and the blend extruded at 246°C. The extrudate was pelletized and the pellets were fed to an injection molding machine which molded test bars at 271°C. The moldings were subjected to tests to determine their physical properties. The blend components and the test results are set forth below in the TABLE 1.

EXAMPLE 7

The procedure of Example 1, supra., was repeated but without the presence of the KM 330 impact modifier, the polyester elastomer or the polycarbonate resins. The test results are shown in Table 1, below.

TABLE 8

| | EXAMPLES | | | | | | |
|---|---|---|---|---|---|---|---|
| COMPOSITION | 1 (control) | 2 (control) | 3 (control) | 4 | 5 | 6 | 7 (control) |
| Valox ® 310 (%) | 90 | 90 | 90 | 40 | 40 | 40 | 100 |
| Lexan ® 145 (%) | - | - | - | 40 | 40 | 40 | -- |
| ECDEL 9965 (%) | 10 | -- | -- | 10 | -- | -- | -- |
| ECDEL 9966 (%) | -- | 10 | -- | -- | 10 | -- | -- |
| ECDEL 9967 (%) | -- | -- | 10 | -- | -- | 10 | -- |
| KM330 (%)* | -- | -- | -- | 10 | 10 | 10 | -- |
| PROPERTIES | | | | | | | |
| Tensile Yield (MPa) | 48.3 | 46.9 | 45.5 | 53.1 | 51.0 | 51.0 | 52 |
| Tensile Break (MPa) | 57.2 | 54.5 | 60.7 | 59.3 | 60.7 | 62.7 | -- |
| Tensile Elongation (%) | 309.8 | 313.0 | 341.5 | 134.5 | 149.9 | 153.7 | 200 |
| Flexural Yield (MPa) | 74.4 | 73.7 | 70.3 | 77.9 | 77.2 | 76.5 | 83 |
| Flexural Modulus (MPax$10^3$) | 2.0 | 2.0 | 2.0 | 2.0 | 2.0 | 2.0 | 2.3 |
| DTUL °C @ 1.82 MPa | 56.0 | 53.8 | 57.8 | 85.1 | 89.8 | 73.0 | 54 |
| 3.175mm N. Izod (J/M) | 71.5 | 71.5 | 71.5 | 933 | 938 | 976 | 53 |
| 6.35mm N. Izod (J/M) | 56 | 50 | 56 | 576 | 592 | 656 | -- |
| Weld Line (J) | 12.4 | 14.4 | 47 | 42 | 45 | 46 | -- |
| KI (CSEC, 6 min.) | 390 | 340 | 330 | 785 | 755 | 780 | 300 |

* Acryloid KM330; an acrylate copolymer prepared as described in U.S. Patent 4,096,202; Rohm and Haas Corp.

## Claims

1. A thermoplastic molding composition, which comprises;
a thermoplastic, aromatic polycarbonate;
a polyester elastomer characterized in part by a durometer hardness of Shore D 50-60; an elongation at fracture of 300-400 percent; a tensile stress at 300 percent elongation of 20-25 MPa; a flexural modulus of 120-130 MPa; an Izod impact strength of notch at -30° C. of less than 900 J/m and a torsional modulus temperature of -30 to -45° C. at 240 MPa; and a thermoplastic polyester of a glycol and an acid selected from the group consisting of phthalic, isophthalic and terephthalic acids.

2. The composition of Claim 1 wherein the elastomer is polycyclohexane-dimethylcyclohexane-dicarboxylate.

3. The composition of Claim 1 wherein the thermoplastic polyester is poly(1,4-butylene terephthalate).

4. The composition of Claim 1 which further comprises an impact strength modifying proportion of an impact-modifying agent.

5. The composition of Claim 1 wherein the proportion of polycarbonate is within the range of from 5 to 70 parts by weight of the composition.

6. The composition of Claim 1 wherein the polyester component resins comprise from 30 to 95 parts by weight of the composition and the ratio of thermoplastic polyester to polyester elastomers is within the range of from 3:1 to 6:1.

7. An article molded from the composition of Claim 1.